# FASCICULE DE BREVET EUROPEEN

(11) **EP 2 286 103 B1**
(45) Date de publication et mention de la délivrance du brevet: **07.09.2016**
(21) Numéro de dépôt: 09727758.6
(22) Date de dépôt: 18.03.2009
(51) Int. Cl.: F16D 21/06, F16F 15/131, F16D 13/58

(54) **DISPOSITIF D'EMBRAYAGE A FRICTION COMPORTANT UN DOUBLE VOLANT AMORTISSEUR DONT UN ENSEMBLE SECONDAIRE EST MONTE FIXE AXIALEMENT PAR RAPPORT A UN PLATEAU DE REACTION**
REIBKUPPLUNGSVORRICHTUNG MIT EINEM DOPPELSTOSSDÄMPFUNGSLENKRAD, FÜR DAS EINE SEKUNDÄRANORDNUNG AXIAL BEZÜGLICH EINER GEGENDRUCKPLATTE FESTGELEGT ANGEBRACHT IST
FRICTION CLUTCH DEVICE COMPRISING A DOUBLE SHOCK-ABSORBING STEERING WHEEL FOR WHICH A SECONDARY ASSEMBLY IS FIXEDLY MOUNTED AXIALLY RELATIVE TO A REACTIVE PLATE

(30) Priorité: 25.03.2008 FR 0851905
(43) Date de publication de la demande: 23.02.2011
(73) Titulaire: Valeo Embrayages, 80009 Amiens (FR)
(72) Inventeur: THIBAUT, François, F-80330 Longueau (FR); BERTIN, Patrice, F-95540 Mery-sur-oise (FR); FENIOUX, Daniel, F-80480 Saleux (FR); MEROU, Patrice, F-80680 Sains En Amienois (FR); DUTIER, Ivan, F-80260 Rainneville (FR)
(74) Mandataire: Cardon, Nicolas
(86) Numéro de dépôt international: PCT/FR2009/050451
(87) Numéro de publication internationale: WO 2009/122096

(56) Documents cités:
- EP-A- 1 361 102
- EP-A- 1 862 687
- EP-A- 1 862 689
- WO-A-2007/000151
- WO-A-2007/082500
- FR-A- 2 886 996
- FR-A- 2 895 476

## Description

L'invention se rapporte à un dispositif d'embrayage à friction, notamment pour un véhicule automobile, pour accoupler un premier arbre moteur arrière et au moins un deuxième arbre mené avant en permettant au moins un débattement axial relatif libre d'un arbre par rapport à l'autre.

L'invention se rapporte plus particulièrement à un dispositif d'embrayage à friction, notamment pour un véhicule automobile, pour accoupler un premier arbre moteur arrière avec au moins un deuxième arbre mené avant en permettant au moins un débattement axial relatif libre d'un arbre par rapport à l'autre, le dispositif d'embrayage comportant un double volant amortisseur qui comporte :
- un ensemble primaire d'entrée de couple qui est monté fixe axialement sur un tronçon d'extrémité avant de l'arbre moteur ;
- un ensemble secondaire de sortie de couple qui est lié en rotation à un plateau de réaction du dispositif d'embrayage et qui est porté par un tronçon d'extrémité arrière de l'arbre mené, l'ensemble secondaire étant monté fixe axialement par rapport au plateau de réaction ;
- au moins un organe élastique à action circonférentielle qui est agencé dans un logement périphérique de l'ensemble primaire pour lier en rotation avec amortissement circonférentiel l'ensemble secondaire avec l'ensemble primaire.

On connaît déjà de nombreux dispositifs d'embrayage à friction pour véhicules automobiles dans lesquels les éléments tournants portés par l'arbre mené sont aussi guidés en rotation sur l'arbre moteur par l'intermédiaire d'un palier de roulement sans jeu axial. Un tel dispositif est par exemple décrit dans le document FR-A-2.778.439.

Cependant, l'invention concerne des dispositifs d'embrayage du type dans lequel le tronçon d'extrémité arrière de l'arbre mené n'est pas guidée par rapport au tronçon d'extrémité avant de l'arbre moteur par l'intermédiaire d'un palier. Dans ce type de dispositif, un tronçon d'extrémité avant de l'arbre moteur et un tronçon d'extrémité arrière correspondant de l'arbre mené sont tous les deux en porte-à-faux. Ainsi, le tronçon d'extrémité avant de l'arbre moteur est libre d'avoir un débattement axial relativement au tronçon d'extrémité arrière de l'arbre mené avec une amplitude maximale finie, notamment lorsque l'arbre moteur est un vilebrequin de moteur à combustion.

Ce type de dispositif d'embrayage peut être équipé d'un volant d'inertie du type "double volant amortisseur". Un tel volant d'inertie comporte principalement un ensemble primaire qui est relié en rotation sans jeu axial avec l'extrémité avant d'un arbre moteur, et un ensemble secondaire qui est relié en rotation, avec ou sans jeu angulaire, avec un plateau de réaction du dispositif d'embrayage. L'ensemble secondaire est monté sur l'ensemble primaire solidaire en rotation par l'intermédiaire d'un mécanisme d'amortissement circonférentiel qui autorise un certain débattement angulaire.

Un tel volant d'inertie est susceptible de filtrer les à-coups de rotation du vilebrequin formant l'arbre moteur, tout en communiquant le couple de rotation du vilebrequin au plateau de réaction.

Lorsque le moteur est en fonctionnement, l'ensemble primaire est susceptible de se déplacer axialement avec un certain débattement par rapport à l'arbre mené, notamment du fait de la flexion du vilebrequin causée par les explosions dans les cylindres du moteur à combustion.

Pour prendre en compte ces déplacements axiaux relatifs, il est connu de monter l'ensemble secondaire du double volant amortisseur mobile axialement par rapport au plateau de réaction.

Il est par exemple connu de monter l'ensemble secondaire sur un tronçon cannelé d'un élément de liaison avec le plateau de réaction. A cet effet, l'ensemble secondaire comporte un orifice central muni de dents radiales qui sont reçues dans les gorges axiales des cannelures.

Les cannelures axiales permettent ainsi la transmission du mouvement de rotation et du couple au plateau de réaction tout en autorisant un déplacement axial de l'ensemble secondaire sur le tronçon cannelé sur toute l'amplitude du débattement axial. Les deux ensembles primaire et secondaire du double volant amortisseur sont ainsi solidaires en déplacement axial avec l'arbre moteur.

Cependant, un tel agencement est susceptible de produire des bruits de claquement entre les dents de l'ensemble secondaire et les cannelures, notamment lors de variations brusques de vitesse.

Pour résoudre ce problème, le document WO-A-2007/000.151 propose un dispositif anti-bruit qui comporte des moyens pour monter le voile formant l'ensemble secondaire précontraint circonférentiellement dans les cannelures de l'élément de liaison au plateau de réaction afin d'éviter le claquement des dents du voile contre les cannelures.

Cependant, un tel dispositif est onéreux et complexe à réaliser car il comprend de nombreuses pièces qui viennent s'ajouter à l'ensemble secondaire.
- Pour remédier notamment à ces problèmes, l'invention propose un dispositif du type décrit précédemment, caractérisé en ce que :
- le plateau de réaction est monté fixe axialement par rapport à l'arbre mené de manière que l'ensemble secondaire soit fixe axialement par rapport à l'arbre mené ;
- l'ensemble secondaire est monté dans l'ensemble primaire avec un jeu axial suffisant pour permettre le débattement axial libre d'un arbre par rapport à l'autre sans interférence entre l'ensemble primaire et l'ensemble secondaire.

Selon d'autres caractéristiques de l'invention :
- le dispositif d'embrayage comporte au moins un élément de frottement qui est intercalé axialement entre l'ensemble primaire et l'ensemble secondaire qui ferme constamment de manière étanche un logement périphérique de l'ensemble primaire logeant l'organe élastique à action circonférentielle, l'élément de frottement étant monté fixe en rotation par rapport à l'un des ensembles, dit porteur, et frottant contre l'autre ensemble, dit frottant ;
- l'ensemble primaire comporte un volant primaire arrière et un couvercle primaire avant qui sont agencés axialement de part et d'autre de l'ensemble secondaire, un premier desdits élément de frottement étant intercalé axialement entre l'ensemble secondaire et le couvercle primaire, et un deuxième desdits éléments de frottement étant intercalé axialement entre le volant primaire et l'ensemble secondaire ;
- au moins un élément de frottement est intercalé axialement entre l'ensemble primaire et l'ensemble secondaire de manière à empêcher l'apparition de bruits par vibration de l'ensemble secondaire, chaque élément de frottement étant monté coulissant axialement sur l'ensemble porteur ;
- des moyens de précontrainte axiale sont intercalés axialement entre l'élément de frottement et l'ensemble porteur pour maintenir un contact constant entre l'élément de frottement et l'ensemble frottant ;
- les moyens de précontraintes sont formés par des rondelles radiales élastiquement déformables selon une direction axiale ;
- le dispositif d'embrayage comporte au moins une paire d'éléments de frottement qui sont agencés axialement de part et d'autre de l'ensemble secondaire et en vis-à-vis ;
- au moins un élément de frottement est formé par une rondelle d'étanchéité qui est fixée à l'ensemble porteur et qui est en contact permanent avec l'ensemble frottant par élasticité pour permettre une étanchéité adaptée du logement périphérique ;
- la rondelle d'étanchéité est formée par une rondelle en tôle ;
- le premier éléments de frottement est une rondelle de frottement et le deuxième élément de frottement est une rondelle d'étanchéité ;
- l'ensemble secondaire comporte au moins une face axiale de sollicitation d'une face axiale associée de poussée en vis-à-vis de l'organe élastique à action circonférentielle, au moins l'une des faces axiales associées de sollicitation ou de poussée présentant des dimensions axiales suffisantes pour être en vis-à-vis l'autre face lors du débattement axial d'un arbre par rapport à l'autre ;
- la face de sollicitation de l'ensemble secondaire est formée par une déformation plastique d'une portion de tranche radiale axiale d'une patte transversale de manière à être élargie axialement par rapport à l'épaisseur axiale de la patte ;
- le dispositif d'embrayage comporte un voile intermédiaire qui est lié en rotation avec l'ensemble secondaire par l'intermédiaire d'un mécanisme d'amortissement circonférentiel avec jeu angulaire ;
- le tronçon d'extrémité avant de l'arbre moteur est libre de se débattre radialement par rapport au tronçon d'extrémité arrière de l'arbre mené, l'ensemble secondaire étant agencé avec un jeu radial par rapport à l'ensemble primaire pour permettre le débattement radial libre d'un arbre par rapport à l'autre ;
- le fond du logement périphérique logeant l'organe élastique est conformé de manière à permettre les débattements radiaux et axiaux de la patte de sollicitation de l'organe élastique-de l'ensemble secondaire ;
- le double volant amortisseur comporte des moyens pour limiter le débattement radial d'un arbre par rapport à l'autre.

D'autres caractéristiques et avantages apparaîtront au cours de la lecture de la description détaillée qui va suivre pour la compréhension de laquelle on se reportera aux dessins annexés parmi lesquels :
- la figure 1 est une demi-vue en coupe axiale selon le plan de coupe 1-1 de la figure 2 qui représente un dispositif d'embrayage à friction comportant un double volant amortisseur réalisé selon les enseignements de l'invention ;
- la figure 2 est une vue de devant qui représente le double volant amortisseur de la figure 1 monté sans son couvercle primaire ;
- la figure 3 est une vue de détail à plus grande échelle de la figure 1 qui représente une patte du voile et un organe élastique à action circonférentielle ;
- la figure 4 est une vue similaire à celle de la figure 1 qui représente un deuxième mode de réalisation de l'invention ;
- la figure 5 est une vue similaire à celle de la figure 1 qui représente un troisième mode de réalisation de l'invention.

Dans la suite de la description, des éléments ayant des fonctions identiques, analogues ou similaires seront désignés par des mêmes numéros de référence.

Afin de faciliter la compréhension de la description et des revendications, on utilisera, à titre non limitatif, une orientation axiale dirigée d'arrière en avant qui est indiquée par la flèche "A" des figures et qui est parallèle à l'axe de rotation "B" du dispositif d'embrayage 10, et une orientation radiale dirigée de l'intérieur vers l'extérieur depuis l'axe de rotation "B" du dispositif d'embrayage à friction 10.

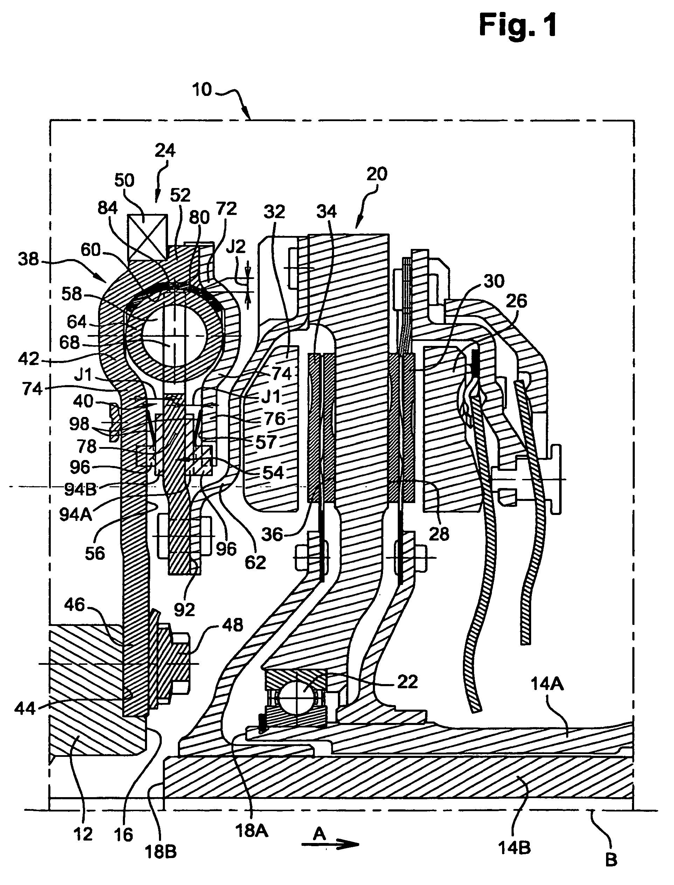

On a représenté à la figure 1 un dispositif d'embrayage 10 qui est destiné à accoupler un arbre moteur qui est agencé axialement vers l'arriére et dont un tronçon d'extrémité- avant 12 libre est représenté à gauche à la figure 1, avec au moins un arbre mené 14 qui est agencé axialement en avant.

Le tronçon d'extrémité avant 12 libre de l'arbre moteur et le tronçon d'extrémité arrière 14 correspondant de l'arbre mené sont tous les deux en porte-à-faux.

Dans la suite de la description et dans les revendication, par soucis de simplification, les termes "tronçon d'extrémité avant libre de l'arbre moteur 12" et "tronçon d'extrémité arrière libre de l'arbre mené 14" seront respectivement désignés par "l'arbre moteur 12" et "l'arbre mené 14", à moins qu'il ne soit précisé que l'arbre est considéré dans son ensemble.

L'arbre moteur 12 est rotatif autour d'un axe de rotation "B" et il est entraîné en rotation par un moteur (non représenté) du véhicule automobile. Il s'agit par exemple d'un vilebrequin de moteur à combustion.

Le dispositif d'embrayage 10 représenté à la figure 1 comporte deux arbres menés dont les tronçons d'extrémité arrière 14A, 14B libres ont été représentés.

Les arbres menés 14A, 14B sont montés rotatifs sensiblement coaxialement à l'arbre moteur 12. Le premier arbre mené 14A forme un tube axial à l'intérieur duquel est agencé le deuxième arbre mené 14B. Chacun des arbres menés 14A, 14B est susceptible de tourner indépendamment de l'autre.

L'extrémité avant libre 16 de l'arbre moteur 12 est agencée axialement en arrière et à distance des extrémités arrière libres 18A, 18B des arbres menés 14A, 14B.

Les arbres menés 14A, 14B sont reliés à une boîte de vitesses arrière (non représentée). Plus particulièrement; le premier arbre mené correspond à certains rapports de vitesses de la boîte de vitesses, par exemple les rapports de vitesses impairs, tandis que le deuxième arbre correspond aux autres rapports de vitesses, par exemple les rapports de vitesses pairs.

Le dispositif d'embrayage 10 comporte des premiers moyens d'accouplement temporaire du premier arbre mené 14A avec l'arbre moteur 12 qui sont portés uniquement par le premier arbre mené 14A.

De manière connue, le dispositif d'embrayage 10 comporte un plateau radial circulaire de réaction 20 qui est monté libre en rotation autour de l'axe de rotation "B". Le plateau de réaction 20 est porté par le premier arbre mené 14A par l'intermédiaire d'un roulement à billes 22.

Le plateau de réaction 20 est plus particulièrement monté fixe axialement par rapport au premier arbre mené 14A. A cet effet, la bague intérieure du roulement à billes 22 est bloquées axialement dans les deux sens, et la bague extérieure du roulement à billes 22 est montée serrée sur le plateau de réaction 20.

Par ailleurs, le plateau de réaction 20 est solidaire en rotation de l'arbre moteur 12 par l'intermédiaire d'un double volant amortisseur 24 qui est agencé à une extrémité arrière du dispositif d'embrayage 10 et qui sera décrit plus en détails par la suite.

Les premiers moyens d'accouplement comportent aussi un premier plateau annulaire avant de pression 26 qui est monté solidaire en rotation du plateau de réaction 20 autour de l'axe de rotation "B" et il est monté coulissant axialement par rapport au plateau de réaction 20. Le plateau avant de pression 26 est plus particulièrement agencé axialement en vis-à-vis d'une face avant 28 du plateau de réaction 20.

Un premier disque coaxial avant de friction 30 est interposé axialement entre le plateau de réaction 20 et le plateau avant de pression 26. Le disque avant de friction 30 comporte sur ses deux faces une garniture annulaire de friction.

Le disque avant de friction 30 est monté solidaire en rotation du premier arbre mené 14A, et il est monté coulissant axialement sur le premier arbre mené 14A.

Le disque avant de friction 30 est destiné à être serré contre la face avant 28 du plateau de réaction 20 par le plateau avant de pression 26 pour accoupler temporairement, c'est-à-dire de manière débrayable, le premier arbre mené 14A avec l'arbre moteur 12.

Le dispositif d'embrayage 10 comporte aussi des deuxièmes moyens d'accouplement temporaire du deuxième arbre mené 14B avec l'arbre moteur 12 qui sont agencés symétriquement aux premiers moyens d'accouplement par rapport au plateau de réaction 20 et qui sont portés par les arbres menés 14A, 14B.

Les deuxièmes moyens d'accouplement comportent ainsi un deuxième plateau arrière de pression 32 et un disque arrière de friction 34 pour l'accouplage temporaire du deuxième arbre mené 14B avec l'arbre moteur 12. Les fonctions du plateau arrière de pression 32, respectivement du disque arrière de friction 34 sont analogues à celles du plateau avant de pression 26, respectivement du disque avant de friction 30.

Le plateau arrière de pression 32 est monté axialement en vis-à-vis de la face arrière 36 du plateau de réaction 20. Le plateau arrière de pression 32 est solidaire en rotation du plateau de réaction 20 et coulissant axialement par rapport au plateau de réaction 20.

Le disque arrière de friction 34 est monté solidaire en rotation du deuxième arbre mené 14B, et il est monté coulissant axialement sur le deuxième arbre mené 14B.

Ainsi, le disque arrière de friction 34 est destiné à être serré contre la face arrière 36 du plateau de réaction 20 par le plateau arrière de pression 32 pour accoupler temporairement le deuxième arbre mené 14B avec l'arbre moteur 12.

Le double volant amortisseur 24 va maintenant être décrit en détail. Le double volant amortisseur 24 comporte un élément d'entrée du couple moteur qui est ici formé par un ensemble primaire 38 arrière et un élément de sortie du couple moteur qui est ici formé par un ensemble secondaire 40 avant.

L'ensemble primaire 38 comporte un volant primaire 42 arrière annulaire qui s'étend radialement coaxialement à l'axe de rotation "B". L'ensemble primaire 38 est porté par l'arbre moteur 12 et il est lié en rotation à l'arbre moteur 12 sans jeu radial, sans débattement angulaire autour de l'axe "B" et sans jeu axial.

A cet effet, une bride de fixation d'extrémité avant 44 formée à l'extrémité avant libre 16 de l'arbre moteur 12 est fixée contre une face d'extrémité arrière d'un moyeu 46 du volant primaire 42 de l'ensemble primaire 38 par l'intermédiaire d'une pluralité de vis 48 dont une seule est représentée à la figure 1. L'ensemble primaire 38 est ainsi solidaire des déplacements de l'extrémité libre 16 de l'arbre moteur 12 dans toutes les directions, et notamment axialement.

L'ensemble primaire 38 porte aussi une couronne dentée de démarreur 50 qui est agencée autour d'une face axiale périphérique extérieure du volant primaire 42 de l'ensemble primaire 38.

L'ensemble primaire 38 comporte à sa périphérie extérieure une jupe 52 qui s'étend axialement vers l'avant depuis un bord périphérique extérieur du volant primaire 42.

L'ensemble secondaire 40 comporte un voile secondaire 54 qui forme un anneau s'étendant radialement autour de l'axe de rotation "B". Le voile secondaire 54 est plus particulièrement agencé radialement en avant et à distance d'une face radiale avant 56 du volant primaire 42, à l'intérieur d'une cavité de l'ensemble primaire 38 délimitée radialement par la jupe 52.

Le voile secondaire 54 présente un diamètre périphérique extérieur qui est inférieur au diamètre du volant primaire 42 de manière à ménager un logement périphérique 58 annulaire entre le bord périphérique extérieur du voile secondaire 54 et la face périphérique intérieure 60 de la jupe 52 comme cela sera décrit par la suite.

Le voile secondaire 54 est lié en rotation au plateau de réaction 20 qui est lui-même porté par le premier arbre mené 14A. Le voile secondaire 54 est porté uniquement par le premier arbre mené 14A.

Dans l'exemple représenté à la figure 1, le voile secondaire 54 est porté de manière solidaire en rotation par le plateau de réaction 20 par l'intermédiaire d'un élément rigide de liaison 62 en forme de couvercle annulaire qui entoure le plateau arrière de pression 32.

Le voile secondaire 54 est lié en rotation avec l'ensemble primaire 38 avec débattement angulaire amorti.

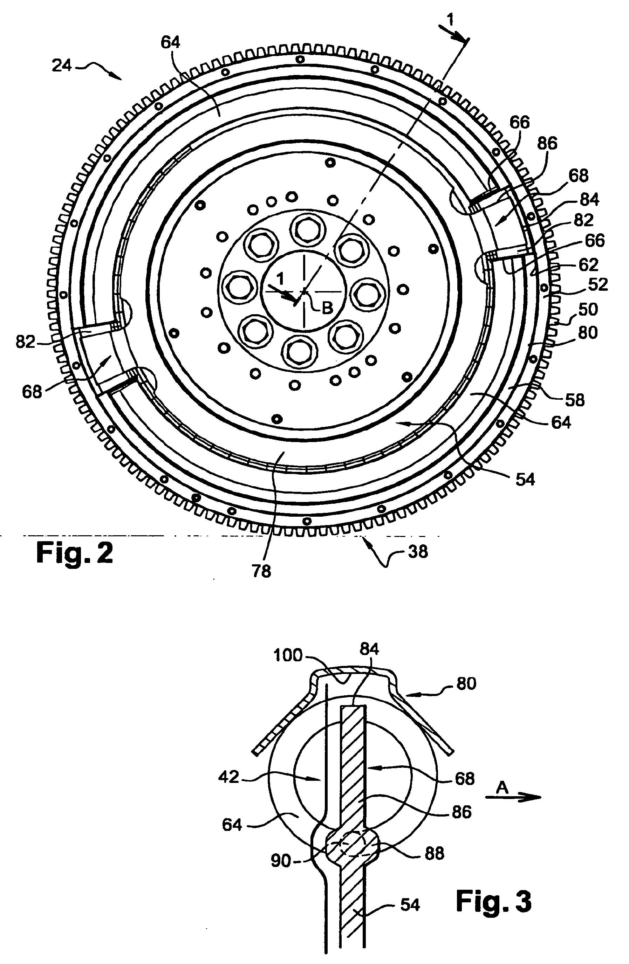

A cet effet, au moins un organe élastique 64 à action circonférentielle est agencé dans le logement périphérique 58 de l'ensemble primaire 38. L'organe élastique 64 est interposé circonférentiellement entre une face d'appui 66 de l'ensemble primaire 38 et une patte d'appui 68 du voile secondaire 54, comme cela est représenté à la figure 2.

Le double volant amortisseur 24 comporte plus particulièrement deux organes élastiques 64 qui sont agencés de manière symétrique par rapport à un diamètre du volant primaire 42. On décrira donc par la suite l'agencement d'un seul de ces organes élastiques 64, la description étant applicable par symétrie à l'autre organe élastique 64.

L'organe élastique 64 est plus particulièrement formé par un ressort hélicoïdal qui s'étend circonférentiellement en arc de cercle par exemple sur un secteur angulaire d'environ 150°.

Comme représenté à la figure 1, l'organe élastique 64 est agencé contre la face axiale radialement intérieure 60 de la jupe 52 périphérique de l'ensemble primaire 38 qui forme le fond du logement périphérique 58. Le logement périphérique 58 est fermé axialement vers l'arrière par le volant primaire 42 de l'ensemble primaire 38 et axialement vers l'avant par un couvercle primaire 72 annulaire radial de l'ensemble primaire 38 qui est fixé à un bord d'extrémité avant de la jupe 52.

Les déplacements radiaux de l'organe élastique 64 sont limités vers l'extérieur par la jupe 52 et vers l'intérieur par un étranglement axial formé par des galbes 74 du volant primaire 42 de l'ensemble primaire 38 et du couvercle primaire 72.

Ainsi, le couvercle primaire 72 comporte un portion annulaire d'extrémité intérieure 76 qui est agencé en vis-à-vis de la face avant 56 du volant primaire 42 de l'ensemble primaire 38 à une distance axiale inférieure à la largeur axiale de l'organe élastique 64 pour former l'étranglement, mais suffisante pour permettre le passage du voile secondaire 54.

En outre une portion annulaire extérieure 78 du voile secondaire 54 est interposée axialement dans l'étranglement de l'ensemble primaire 38. Plus particulièrement, le diamètre du bord périphérique extérieur du voile secondaire 54 est supérieur au diamètre périphérique intérieur du couvercle primaire 72.

Une goulotte de guidage 80 est interposée radialement entre l'organe élastique 64 et le fond 58 du logement périphérique 58 pour favoriser les déplacements circonférentiels de ses spires lorsque l'organe élastique 64 est plaqué contre le fond 58 du logement périphérique 58 par la force centrifuge. La goulotte 80 présente la même longueur circonférentielle que l'organe élastique 64 lorsque le dispositif d'embrayage 10 est au repos.

Le logement périphérique 58 est délimité circonférentiellement par une première face radiale axiale d'appui 66 amont et par une deuxième face radiale axiale d'appui 66 aval. A cet effet, la face avant 56 du volant primaire 42 de l'ensemble primaire 38 et la face arrière 57 du couvercle primaire 72 comportent chacun deux bossages 82 diamétralement opposés. Les faces latérales des bossages 82 forment ainsi les faces radiales d'appui 66 qui délimitent les deux logements périphériques 58.

Les bossages 82 du couvercle primaire 72 sont agencés axialement en vis-à-vis et à distance des bossages 82 du volant primaire 42.

Le voile secondaire 54 comporte deux pattes 68 qui s'étendent radialement depuis le bord périphérique extérieur du voile secondaire 54 jusqu'à une extrémité extérieure libre 84. Chaque patte 68 est agencée axialement entre deux bossages 82 concordant du volant primaire 42 et du couvercle primaire 72.

Chaque patte 68 -est-délimitée circonférentiellement par deux tranches 86 radiales dont une portion forme une face de sollicitation 90 qui est destinée à venir en contact avec l'extrémité en vis-à-vis du fil de l'organe élastique 64 pour solliciter les organes élastiques 64 dans un sens ou dans l'autre. Ainsi la face axiale d'extrémité du fil de l'organe élastique 64 forme une face de poussée 88 associée à la face de sollicitation 90 en vis-à-vis du voile secondaire 54.

Chaque patte 68 occupe un secteur angulaire sensiblement identique à celui des bossages 82, comme représenté à la figure 2.

Le voile secondaire 54 est ainsi susceptible de pivoter dans les deux sens autour de l'axe "B" par rapport à l'ensemble primaire 38, par exemple de plus ou moins 60°, en sollicitant les organes élastiques 64 par l'intermédiaire des pattes 68. Les organes élastiques 64 sont alors comprimés en prenant appui sur les faces d'appui 66 correspondantes des bossages 82.

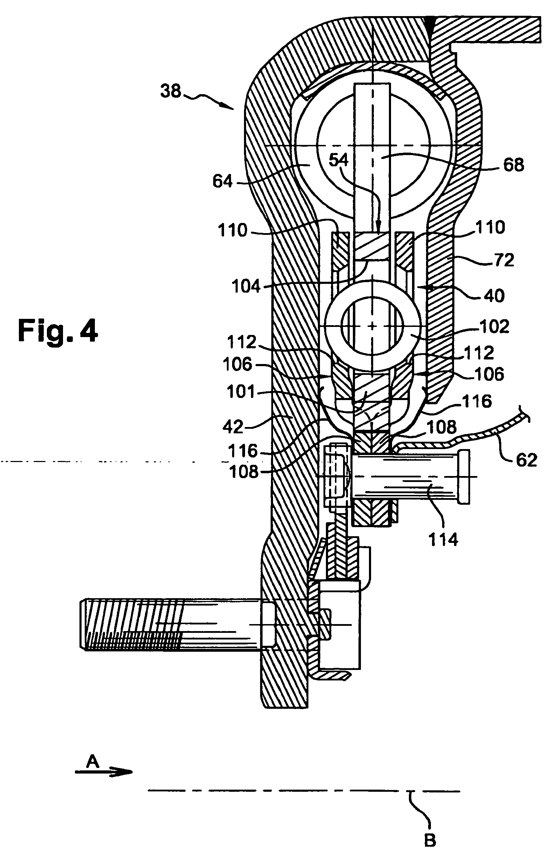

Pour permettre le pivotement du voile secondaire 54 autour de l'axe "B" par rapport à l'ensemble primaire 38, le voile secondaire 54 est reçu avec un jeu axial "J1" entre le volant primaire 42 et le couvercle primaire 72, comme illustré à la figure 4.

Les pattes 68 du voile secondaire 54 sont aussi reçues avec un jeu radial "J2" entre leur bord d'extrémité extérieur 84 et la face intérieure 60 de la jupe 52. Plus particulièrement, ce jeu radial "J2" est supérieur à l'épaisseur radiale des goulottes de guidage 80 des organes élastiques 64.

Le dispositif d'embrayage 10 est conçu de manière à permettre au moins un débattement axial relatif libre de l'arbre moteur 12 par rapport aux arbres menés 14A, 14B. L'arbre moteur 12 n'est pas guidé par rapport au premier arbre mené 14A.

Dans l'exemple représenté aux figures, l'extrémité avant 16 de l'arbre moteur 12 est libre de se déplacer radialement et axialement dans toutes les directions par rapport aux arbres menés 14A, 14B.

L'amplitude maximale du débattement axiale de l'arbre moteur 12 par rapport aux arbres menés 14A, 14B dépend notamment de l'élasticité de l'arbre moteur 12 considéré dans-son ensemble, de la vitesse de rotation du moteur à combustion, ainsi que des jeux de fixation du moteur et de la boîte de vitesse sur la structure du véhicule automobile.

Conformément aux enseignements de l'invention, le voile secondaire 54 est monté fixe axialement par rapport au plateau de réaction 20. Le plateau de réaction 20 étant lui-même fixe axialement par rapport au premier arbre mené 14A, le voile secondaire 54 est donc monté fixe axialement par rapport au premier arbre mené 14A.

Plus particulièrement, comme représenté à la figure 1, une portion annulaire 92 de la périphérie intérieure de la face radiale avant du voile secondaire 54 est fixée contre une face en vis-à-vis de l'élément de liaison 62 par des rivets, des vis, ou tout autre moyen de fixation approprié.

L'élément de liaison 62 est lui-même fixé au plateau de réaction 20 ici par l'intermédiaire de vis. Ainsi, le voile secondaire 54, l'élément de liaison 62 et le plateau de réaction 20 sont fixés ensembles par une liaison mécanique dite "complète" ou "encastrement".

Ainsi, le voile secondaire 54 est solidaire axialement du premier arbre mené 14A tandis que l'ensemble primaire 38, comportant le volant primaire 42 arrière et le couvercle primaire 72, est solidaire axialement de l'arbre moteur 12.

Le voile secondaire 54 est monté dans l'ensemble primaire 38 avec un jeu axial "J1" suffisant pour permettre le débattement axial libre de l'arbre moteur 12 par rapport au premier arbre mené 14A sans interférence, c'est-à-dire en évitant que le voile secondaire 54 ne vienne en contact avec l'ensemble primaire 38 vers l'arrière ou vers l'avant, et ce pour toutes les positions axiales de l'ensemble primaire 38 par rapport à l'ensemble secondaire 40 dans les limites de l'amplitude maximale de débattement axial d'un arbre 12 par rapport à l'autre 14A.

Dans l'exemple représenté aux figures, l'extrémité libre avant 16 l'arbre moteur 12 est susceptible de se débattre axialement dans les deux sens par rapport à une position nominale de repos relativement au premier arbre mené 14A.

Un tel agencement permet d'obtenir de manière simple un double volant amortisseur 24 silencieux, et comportant peu de pièces.

Pour empêcher l'apparition de bruits de vibration du voile secondaire 54, une paire d'éléments de frottement 94 est intercalée axialement entre l'ensemble primaire 38 et le voile secondaire 54.

Ainsi, une première rondelle radiale avant de frottement 94A est intercalée entre la face avant de la portion annulaire extérieure 78 du voile secondaire 54 et la face arrière 57 de la portion annulaire intérieure 76 du couvercle primaire 72, et une deuxième rondelle radiale arrière de frottement 94B est interposée entre la face arrière de la portion annulaire extérieure 78 du voile secondaire 54 et la face avant 56 du volant primaire 42.

Comme représentées à la figure 1, les rondelles de frottement 94A, 94B sont plus particulièrement en contact avec le voile secondaire 54 par une face annulaire plane présentant une largeur radiale très importante pour permettre une absorption optimale des vibrations. En d'autres termes, la surface de contact entre les rondelles de frottement 94A, 94B et le voile secondaire 54 est importante, et elle ne se réduit pas à une simple ligne circulaire.

Les rondelles de frottement 94A, 94B sont agencées en vis-à-vis l'une de l'autre de part et d'autre du voile secondaire 54.

Ces rondelles de frottement 94A, 94B sont aussi connues sous l'appellation "rondelles hystérésis". De telles rondelles de frottement sont réalisées en un matériau particulièrement adaptées pour frotter sur l'ensemble secondaire sans présenter de problèmes d'usure prématurée.

Ces rondelles de frottement 94A, 94B sont par exemple réalisées en matière plastique rigide.

Le terme rigide signifie ici que la déformation élastique axiale maximale des rondelles de frottement 94A, 94B est négligeable par rapport à l'amplitude du débattement axial d'un arbre par rapport à l'autre.

Les rondelles de frottement 94A, 94B sont portées fixes en rotation par rapport à l'ensemble primaire 38. L'ensemble primaire 38 forme ainsi un ensemble porteur des rondelles de frottement 94A, 94B, tandis que l'ensemble secondaire 40 forme un ensemble frottant contre les rondelles de frottement 94A, 94B.

Chaque rondelle de frottement 94A, 94B comporte ici des doigts 96 axiaux, ou des cannelures, qui sont reçus dans des encoches complémentaires du couvercle primaire 72 et du volant primaire 42. Les doigts 96 axiaux assurent ainsi l'entraînement en rotation des rondelles de frottement 94A, 94B par l'ensemble primaire 38. Les doigts 96 axiaux permettent aussi de positionner les rondelles sur l'ensemble primaire 38.

En outre, afin de permettre un contact permanent des rondelles de frottement 94A, 94B avec le voile secondaire 54 indépendamment de la position axiale relative d'un arbre 12 par rapport à l'autre 14A, les rondelles de frottement 94A, 94B sont montées coulissantes axialement sur l'ensemble primaire 38. Ainsi, les doigts 96 axiaux sont libres de coulisser axialement dans les encoches.

La longueur axiale des doigts 96 est adaptée à l'amplitude maximale de débattement axial afin que les rondelles de frottement 94A, 94B soient fixes en rotation par rapport à l'ensemble primaire 38 quelle que soit la position axiale d'un arbre 12 par rapport à l'autre 14A.

Les rondelles de frottement 94A, 94B et les doigts 96 sont avantageusement réalisés venus de matière en une seule pièce. Ainsi les doigts 96 sont réalisés en un matériau plastique.

Pour que le contact entre les rondelles de frottement 94A, 94B et le voile secondaire 54 soit constant, des moyens associés de précontrainte axiale sont intercalés axialement entre l'élément de frottement 94 associé et l'ensemble primaire 38. Les moyens de précontrainte sont ici formés par des rondelles radiales élastiquement déformables selon une direction axiale du type rondelle "Belleville".

Ainsi, une première rondelle élastique 98A de type "Belleville" est intercalée axialement dans un état comprimé entre la rondelle avant 94A et le couvercle primaire 72 pour pousser axialement la rondelle de frottement avant 94A contre la face avant du voile secondaire 54, et une deuxième rondelle élastique 98B de type "Belleville" est intercalée axialement dans un état comprimé entre la rondelle de frottement arrière 94B et le volant primaire 42 de l'ensemble primaire 38 pour pousser axialement la rondelle de frottement arrière 94B contre la face arrière du voile secondaire 54. Le voile secondaire 54 est ainsi pincé entre les deux rondelles de frottement 94A, 94B.

L'effort de précontrainte est déterminé de manière que chaque rondelle élastique 98 exerce un effort de poussée axiale de la rondelle de frottement 94 associée contre le voile secondaire 54 quelle que soit la position axiale d'un arbre 12 par rapport à l'autre 14A.

Avantageusement, l'ensemble formé par les rondelles élastiques 98 et les rondelles de frottement 94A, 94B forme aussi un moyen de fermeture étanche des logements périphériques 58. Les logements périphériques 58 sont ainsi fermés radialement vers l'intérieur, au niveau de l'étranglement entre le volant primaire 42 et le couvercle primaire 72.

En effet, il est connu d'appliquer des substances lubrifiantes, par exemple de la graisse, pour diminuer les frottements entre l'organe élastique 64 et les parois du logement périphérique 58. La fermeture étanche des logements périphériques 58 par les rondelles élastiques 98 et par les rondelles de frottement 94A, 94B permet ainsi d'éviter, d'une part, que des particules ne viennent encrasser les organes élastique 64, et, d'autre part, que la substance lubrifiante ne soit projetée sur les disques de friction 30, 34.

Par ailleurs, on a constaté que lorsque l'amplitude de débattement axial est maximale, la face de sollicitation 90 des pattes 68 du voile secondaire 54-est susceptible d'être décalée axialement par rapport à la face de poussée 88 de l'organe élastique 64 qui est solidaire axialement de l'ensemble primaire 38.

Pour remédier à ce problème, au moins l'une des faces axiales associées de sollicitation 90 ou de poussée 88 présente des dimensions axiales suffisantes pour être en contact avec l'autre face quelle que soit la position axiale de l'ensemble primaire 38 par rapport à l'ensemble secondaire 40 dans les limites de l'amplitude maximale de débattement axial d'un arbre 12 par rapport à l'autre 14A.

Plus particulièrement, comme représenté à la figure 3, la face de sollicitation 90 de l'ensemble secondaire 40 est formée par une déformation plastique d'une portion de tranche 86 axiale radiale de la patte 68 transversale de manière à être élargie axialement par rapport à l'épaisseur axiale de la patte 68.

La déformation plastique du matériau formant le voile secondaire 54, qui est ici métallique, est par exemple obtenue par une frappe perpendiculaire sur la tranche 86 de la patte 68.

Selon une variante non représentée de l'invention, on a aussi constaté que dans certaines situations de fonctionnement, il se produit un débattement radial entre l'arbre moteur et le premier arbre mené. Ceci entraîne donc un déplacement radial du voile secondaire par rapport à l'ensemble primaire. Les axes de l'arbre moteur et des arbres menés sont alors susceptibles de ne plus être alignés.

Si l'extrémité radialement extérieure des pattes touche la face intérieure de la jupe de l'ensemble primaire, le voile secondaire est susceptible d'être endommagé.

De plus, des perturbations du fonctionnement sont susceptibles de se produire, notamment les pattes risquent d'être bloquées contre l'une des extrémités circonférentielle des goulottes, entraînant ainsi un blocage angulaire sans amortissement du voile secondaire par rapport à l'ensemble primaire.

Pour remédier à ce problème, et comme représenté à la figure 3, pour éviter que les pattes 68 du voile secondaire 54 ne touchent le fond de la goulotte 80 lors du déplacement simultanément axial et radial d'un arbre 12 par rapport à l'autre 14A, la goulotte 80 est avantageusement conformée de manière à éviter les interférences des pattes 68 du voile secondaire 54 avec le fond du logement périphérique 58.

Ainsi, la goulotte 80 présente une section radiale axiale en forme de "V" dont la pointe est dirigée vers l'extérieur. La goulotte 80 est en contact avec l'organe élastique 64 par deux lignes circulaires parallèles.

Une gorge 100 annulaire est réservée en fond de goulotte 80 entre les deux lignes de contact pour permettre les déplacements de la patte 68 du voile secondaire 54. La gorge 100 s'étend radialement vers l'extérieur. La gorge 100 de la goulotte 80 n'est pas en contact avec l'organe élastique 64.

La largeur axiale de la gorge 100 est déterminée en fonction de l'amplitude maximale du débattement axial. Dans l'exemple représenté à la figure 3, le fond de la gorge 100 est plat, permettant ainsi un large débattement axial de la patte 68 lorsque l'arbre moteur 12 est déplacé radialement par rapport au premier arbre mené 14A.

Selon une variante de l'invention qu'il est possible de combiner avec la goulotte 80 comportant une gorge 100, le voile secondaire porte une première face de butée qui est agencée avec un jeu radial radialement en vis-à-vis d'une deuxième face de butée du couvercle primaire de manière à limiter les déplacements radiaux du voile secondaire par rapport à l'ensemble primaire. Ainsi, l'extrémité extérieure de la patte du voile secondaire ne touche pas le fond du logement périphérique de l'ensemble primaire lorsque l'arbre moteur se déplace radialement par rapport au premier arbre mené.

A cet effet, le jeu radial entre les deux faces de butée est inférieur au jeu radial entre l'extrémité extérieure des pattes et le fond du logement périphérique.

Plus particulièrement, en présence d'une goulotte de guidage, le fond du logement périphérique est formé par une face intérieure de la goulotte. Le jeu radial est alors conçu pour que l'extrémité extérieure des pattes ne touchent pas la goulotte de guidage formant ici le fond du logement périphérique.

Un deuxième mode de réalisation de l'invention est représenté à la figure 4. Il est globalement identique au premier mode de réalisation. Seules les différences entre les deux modes seront donc détaillées par la suite.

Le double volant amortisseur 24 comporte ici un voile intermédiaire 101 de structure similaire à celle du voile secondaire 54 du premier mode de réalisation. Ce voile intermédiaire 101 comporte ainsi des pattes d'appui 68 qui sont agencées entre les deux organes élastiques 64.

Le voile intermédiaire 101 est relié en rotation avec l'ensemble secondaire 40 par l'intermédiaire d'un mécanisme d'amortissement circonférentiel avec jeu angulaire. L'ensemble secondaire 40 est ici formé par deux rondelles de guidage 106 du voile intermédiaire 101 qui seront décrites plus en détail par la suite.

Le mécanisme d'amortissement comporte au moins un ressort 102 analogue à celui formant l'organe élastique 64 mais présentant une raideur et des dimensions différentes. Plus particulièrement, le mécanisme d'amortissement comporte ici deux ressorts 102 qui sont agencés symétriquement par rapport à un diamètre du voile intermédiaire 101. On décrira donc l'agencement d'un seul ressort 102, la description étant applicable à l'autre ressort 102 par symétrie.

Le ressort 102 est agencé circonférentiellement dans une fenêtre 104 en arc de cercle qui ajoure le voile intermédiaire 101. Le ressort 102 est maintenu dans la fenêtre 104 par les deux rondelles de guidage 106 avant et arrière qui sont agencées de part et d'autre du voile intermédiaire 101.

En outre, le voile intermédiaire 101 présente une forme annulaire délimitée intérieurement par un bord périphérique intérieur.

Les rondelles de guidage 106 formant l'ensemble secondaire 40 sont ici identiques et elles sont symétriques par rapport au plan du voile intermédiaire 101. On ne décrira donc qu'une seule rondelle de guidage 106 par la suite.

La rondelle de guidage 106 présente une forme annulaire qui s'étend radialement coaxialement à l'axe "B". Comme représenté à la figure 4, en section axiale, la rondelle comporte une première plage radiale annulaire intérieure 108 et une deuxième plage radiale annulaire extérieure 110 qui sont étagées de manière que la plage intérieure 108 soit décalée axialement vers le plan du voile intermédiaire 101 par rapport à la plage extérieure 110. Les deux plages 108, 110 sont reliées l'une à l'autre par une cambrure du matériau formant la rondelle de guidage 106.

La plage extérieure 110 de la rondelle de guidage 106 comporte des lumières 112 en arc de cercle qui sont agencées en coïncidence avec les ressorts 102 du voile intermédiaire 101. Les lumières 112 sont équipées de moyens pour retenir axialement le ressort 102 dans la fenêtre 104 du voile intermédiaire 101, par exemple le bord en arc de cercle des lumières 112 comporte des pattes (non représentées) de retenu axiale qui permettent de loger le ressort 102, mais qui empêchent le ressort 102 de passer à travers la lumière 112.

Le diamètre intérieur de la plage extérieure 110 est inférieur au diamètre intérieur du voile intermédiaire 101 de manière que la plage intérieure 108 de la rondelle de guidage 106 s'étende vers l'intérieur dans l'orifice central du voile intermédiaire 101.

La plage intérieure 108 est décalée axialement vers le plan transversal médian du voile intermédiaire 101 afin d'être plaquée contre la face en vis-à-vis de la plage intérieure 108 de l'autre rondelle de guidage 106. Dans cette position montée, un jeu axial est réservé entre les plages extérieures 110 des rondelles de guidage 106 et le voile intermédiaire 101 pour permettre au voile intermédiaire 101 de tourner autour de l'axe "B" relativement aux rondelles de guidage 106.

Les rondelles de guidage 106 sont fixées l'une à l'autre par des rivets 444 dont un seul est représenté à la figure 4.

Le voile intermédiaire 101 est ainsi emprisonné axialement par les plages extérieures 110, et radialement par les plages intérieures 108.

Le voile intermédiaire 101 est monté avec un débattement angulaire autour de l'axe "B" par rapport aux rondelles de guidage 106 avec amortissement circonférentiel par le ressort 102. Le ressort 102 est actionné par les bords radiaux (non représentés) de la fenêtre 104 du voile intermédiaire 101, d'une part, et par les bords radiaux (non représentés) opposés des lumières 112 des rondelles de guidage 106, d'autre part.

L'ensemble secondaire 40, qui est ainsi formé par l'assemblage des rondelles de guidage 106, est fixé à l'élément de liaison 62, comme expliqué dans le premier mode de réalisation.

Avantageusement, la fixation de l'ensemble secondaire 40 sur l'élément de liaison 62 et la fixation des rondelles de guidage 106 l'une sur l'autre sont réalisés par des moyens communs de fixation. Ainsi, dans l'exemple représenté à la figure 4, chaque rivet 114 de fixation enserre axialement les rondelles et l'élément de liaison 62.

Dans ce deuxième mode de réalisation, le dispositif d'embrayage 10 ne comporte pas de rondelles de frottement. L'étanchéité du logement périphérique 58 de l'ensemble primaire 38 est alors réalisée par deux rondelles de tôle 116 présentant une forme globalement tronconique qui sont agencées en opposition de part et d'autre des rondelles de guidage 106.

Une extrémité intérieure de chaque rondelle de tôle 116 est fixée aux rondelles de guidage 106, à proximité de leur bord intérieur.

Avantageusement, les rondelles de tôle 116 sont fixées aux rondelles de guidage 106 par les rivets 114 de fixation des rondelles de guidage 106 à l'élément de liaison 62

Les rondelles de tôle 116 s'étendent radialement vers l'extérieur et axialement vers une face 56, 57 de l'ensemble primaire 38 en vis-à-vis. Les rondelles de tôle 116 sont élastiquement déformables et elles sont montées précontraintes axialement de manière que le bord d'extrémité extérieur des rondelles de tôle 116 soit constamment plaqué contre les faces 56, 57 associées en vis-à-vis de l'ensemble primaire 38.

Le bord d'extrémité extérieur des rondelles de tôle 116 est ainsi en contact constant avec l'ensemble primaire 38 du fait de leur élasticité propre.

Ainsi, les rondelles de tôles 116 sont solidaires en rotation de l'ensemble secondaire 40 et elles sont en contact permanent avec l'ensemble primaire 38 pour permettre une étanchéité adaptée des logements périphériques 58 en glissant sur les faces 56, 57 de l'ensemble primaire 38.

Les rondelles de tôle 116 sont donc plaquées axialement sur les faces 56, 57 de l'ensemble primaire 38, et elles glissent sur lesdites faces 56, 57. Ainsi, selon la définition première du verbe "frotter", les rondelles de tôle 116 sont frottantes sur l'ensemble primaire.

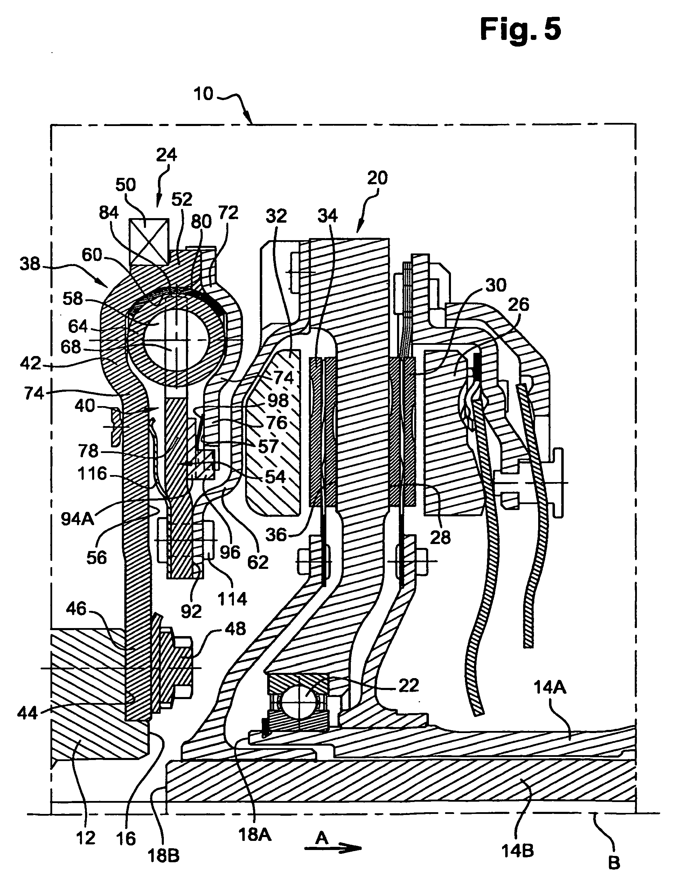

Un troisième mode de réalisation a été représenté à la figure 5. Il est globalement identique au premier mode de réalisation. Seules les différences entre les deux modes seront donc détaillées par la suite.

Dans ce troisième mode de réalisation, la deuxième rondelle radiale arrière de frottement 94B a été remplacée par une rondelle d'étanchéité 116, telle que décrite dans le troisième mode de réalisation, qui est interposée entre la face arrière de la portion annulaire extérieure 78 du voile secondaire 54 et la face avant 56 du volant primaire 42.

Une extrémité intérieure de la rondelle de tôle 116 est fixée à la face arrière du voile secondaire 54, à proximité de son bord intérieur.

Avantageusement, la rondelle de tôle 116 est fixée au voile secondaire 54 par les rivets 114 de fixation du voile secondaire 54 à l'élément de liaison 62.

La rondelle de tôle 116 s'étend radialement vers l'extérieur et axialement vers la face avant 56 du volant primaire 42. La rondelle de tôle 116 est élastiquement déformable et elle est montée précontrainte axialement de manière que le bord d'extrémité extérieur de la rondelle de tôle 116 soit constamment plaqué contre la face avant 56 du volant primaire 42.

Le bord extérieur de la rondelle de tôle 116 est en contact avec le volant primaire 42 en axialement vis-à-vis de la rondelle de frottement 94A.

Le bord d'extrémité extérieur de la rondelle de tôle 116 est ainsi en contact constant avec l'ensemble primaire 38 du fait de son élasticité propre.

Ainsi, la rondelle de tôle 116 est solidaire en rotation de l'ensemble secondaire 40 et elle est en contact permanent avec l'ensemble primaire 38 pour permettre une étanchéité adaptée des logements périphériques 58 en frottant sur la face arrière 56 du volant primaire 42, en coopération avec la rondelle de frottement 94A précontrainte par la rondelle élastique 98.

L'invention a été décrite en application à un embrayage comportant plusieurs disques de friction. On comprendra que le double volant amortisseur réalisé selon les enseignements de l'invention peut aussi être appliqué à d'autres types d'embrayage à friction, et notamment des embrayages à friction ne comportant qu'un disque de friction unique.

Le dispositif d'embrayage réalisé selon les enseignements de l'invention permet ainsi d'obtenir un double volant amortisseur silencieux de manière simple et peu onéreuse en fixant de manière rigide l'ensemble secondaire 40 à l'arbre mené.

## Revendications

1. Dispositif d'embrayage à friction (10), notamment pour un véhicule automobile, pour accoupler un premier arbre moteur (12) arrière avec au moins un deuxième arbre mené (14A) avant en permettant au moins un débattement axial relatif libre d'un arbre (12) par rapport à l'autre (14A), le dispositif d'embrayage comportant un double volant amortisseur (24) qui comporte :
- un ensemble primaire (38) d'entrée de couple qui est apte à être monté fixe axialement sur un tronçon d'extrémité avant (42) de l'arbre moteur (12) ;
- un ensemble secondaire (40) de sortie de couple qui est lié en rotation à un plateau de réaction (20) du dispositif d'embrayage (10) et qui est porté par un tronçon d'extrémité arrière de l'arbre mené (14A), l'ensemble secondaire (40) étant monté fixe axialement par rapport au plateau de réaction (20) et comportant un voile secondaire (54) ;
- au moins un organe élastique (64) à action circonférentielle qui est agencé dans un logement (58) périphérique de l'ensemble primaire (38) pour lier en rotation avec amortissement circonférentiel l'ensemble secondaire (40) avec l'ensemble primaire (38), et qui est interposé circonférentiellement entre une face d'appui (66) de l'ensemble primaire (38) et une patte d'appui (68) du voile secondaire (54),
**caractérisé en ce que** le plateau de réaction (20) est apte à être monté fixe axialement par rapport à l'arbre mené (14A) de manière que l'ensemble secondaire (40) soit fixe axialement par rapport à l'arbre mené (14A) ;
et **en ce que** l'ensemble secondaire (40) est monté dans l'ensemble primaire (38) avec un jeu axial (J1) suffisant pour permettre le débattement axial libre d'un arbre (12) par rapport à l'autre (14A) sans interférence entre l'ensemble primaire (38) et l'ensemble secondaire (40).

2. Dispositif d'embrayage à friction (10) selon la revendication précédente, **caractérisé en ce qu'**il comporte au moins un élément de frottement (94, 94B, 98, 116) qui est intercalé axialement entre l'ensemble primaire (38) et l'ensemble secondaire (40) qui ferme constamment de manière étanche un logement périphérique (58) de l'ensemble primaire (38) logeant l'organe élastique à action circonférentielle (64), et **en ce que** l'élément de frottement (94A, 94B, 98, 116) est monté fixe en rotation par rapport à l'un des ensembles (38), dit porteur, et frottant contre l'autre ensemble (40), dit frottant.

3. Dispositif à friction (10) selon la revendication précédente, **caractérisé en ce que** l'ensemble primaire (38) comporte un volant primaire (42) arrière et un couvercle primaire (72) avant qui sont agencés axialement de part et d'autre de l'ensemble secondaire (40),
et **en ce qu'**un premier desdits élément de frottement (94A, 98, 116) est intercalé axialement entre l'ensemble secondaire (40) et le couvercle primaire (72),
et **en ce qu'**un deuxième desdits éléments de frottement (94B, 98, 116) est intercalé axialement entre le volant primaire (42) et l'ensemble secondaire (40).

4. Dispositif d'embrayage à friction (10) selon l'une quelconque des revendications 2 ou 3, **caractérisé en ce qu'**au moins un élément de frottement (94A, 94B) est intercalé axialement entre l'ensemble primaire (38) et l'ensemble secondaire (40) de manière à empêcher l'apparition de bruits par vibration de l'ensemble secondaire (40), et **en ce que** chaque élément de frottement (94A, 94B) est monté coulissant axialement sur l'ensemble porteur (38).

5. Dispositif d'embrayage à friction (10) selon la revendication précédente, **caractérisé en ce que** des moyens de précontrainte axiale (98) sont intercalés axialement entre l'élément de frottement (94A, 94B) et l'ensemble porteur (38) pour maintenir un contact constant entre l'élément de frottement (94A, 94B) et l'ensemble frottant (40).

6. Dispositif d'embrayage à friction (10) selon la revendication précédente, **caractérisé en ce que** les moyens de précontrainte sont formés par des rondelles (98) radiales élastiquement déformables selon une direction axiale.

7. Dispositif d'embrayage à friction (10) selon l'une quelconque des revendications 4 à 6, **caractérisé en ce qu'**il comporte au moins une paire d'éléments de frottement (94A, 94B) qui sont agencés axialement de part et d'autre de l'ensemble secondaire (40) et en vis-à-vis.

8. Dispositif d'embrayage à friction (10) selon l'une quelconque des revendications 2 à 7, **caractérisé en ce qu'**au moins un élément de frottement est formé par une rondelle d'étanchéité (116) qui est fixée à l'ensemble porteur (40) et qui est en contact permanent avec l'ensemble frottant (38) par élasticité pour permettre une étanchéité adaptée du logement pénphérique (58).

9. Dispositif d'embrayage à friction (10) selon la revendication précédente, **caractérisé en ce que** la rondelle d'étanchéité est formée par une rondelle en tôle (116)

10. Dispositif d'embrayge à friction (10) selon la revendication 3, **caractérisé en ce que** :
- le premier élément de frottement (94A, 98) est réalisé selon l'une quelconque des revendications 5 ou 6 ;
- le deuxième élément de frottement (116) est réalisé selon l'une quelconque des revendications 8 ou 9.

11. Dispositif d'embrayage à friction (10) selon l'une quelconque des revendications précédentes, **caractérisé en ce que** l'ensemble secondaire (40) comporte au moins une face axiale de sollicitation (88) d'une face axiale associée de poussée (90) en vis-à-vis de l'organe élastique à action circonférentielle (64), et **en ce qu'**au moins l'une des faces axiales associées de sollicitation (88) ou de poussée (90) présente des dimensions axiales suffisantes pour être en vis-à-vis l'autre face (90, 88) lors du débattement axial d'un arbre (12) par rapport à l'autre (14A).

12. Dispositif d'embrayage à friction (10) selon la revendication précédente, **caractérisé en ce que** la face de sollicitation (88) de l'ensemble secondaire (40) est formée par une déformation plastique d'une portion de tranche radiale axiale (86) d'une patte (68) transversale de manière à être élargie axialement par rapport à l'épaisseur axiale de la patte.

13. Dispositif d'embrayage à friction (10) selon l'une quelconque des revendications 1 à 8, **caractérisé en ce qu'**il comporte un voile intermédiaire (101) qui est lié en rotation avec l'ensemble secondaire (40) par l'intermédiaire d'un mécanisme d'amortissement circonférentiel avec jeu angulaire (102, 106).

14. Dispositif d'embrayage à friction (10) selon l'une quelconque des revendications précédentes, **caractérisé en ce que** le tronçon d'extrémité avant de l'arbre moteur (12) est libre de se débattre radialement par rapport au tronçon d'extrémité arrière de l'arbre mené (14A), et **en ce que** l'ensemble secondaire (40) est agencé avec un jeu radial (J2) par rapport à l'ensemble primaire (38) pour permettre le débattement radial libre d'un arbre (12) par rapport à l'autre (14A).

15. Dispositif d'embrayage à friction (10) selon la revendication précédente prise en combinaison avec les revendications 6 et 8, **caractérisé en ce que** le fond (80, 100) du logement périphérique (58) logeant l'organe élastique (64) est conformé de manière à permettre les débattements radiaux et axiaux de la patte (68) de sollicitation de l'organe élastique (64) de l'ensemble secondaire (40).

16. Dispositif d'embrayage à friction selon l'une quelconque des revendications 11 ou 12, **caractérisé en ce que** le double volant amortisseur (24) comporte des moyens pour limiter le débattement radial d'un arbre par rapport à l'autre.

## Patentansprüche

1. Reibungskupplungsvorrichtung (10), insbesondere für ein Kraftfahrzeug, um eine erste hintere Antriebswelle (12) mit mindestens einer zweiten vorderen Abtriebswelle (14A) zu koppeln, wodurch mindestens eine relative axiale freie Durchfederung einer Welle (12) im Verhältnis zu der anderen (14A) ermöglicht wird, wobei die Reibungskupplungsvorrichtung eine Zweimassenschwungraddämpfung (24) umfasst, die Folgendes umfasst:
- eine primäre Eingangsdrehmomentbaugruppe (38), die an einem vorderen Endabschnitt (42) der Antriebswelle (12) axial feststehend montiert werden kann;
- eine sekundäre Ausgangsdrehmomentbaugruppe (40), die drehbar mit einer Reaktionsscheibe (20) der Kupplungsvorrichtung (10) verbunden ist, und die durch einen hinteren Endabschnitt der Abtriebswelle (14A) getragen wird, wobei die sekundäre Baugruppe (40) im Verhältnis zu der Reaktionsscheibe (20) axial feststehend montiert ist und eine sekundäre Mitnehmerscheibe (54) umfasst;
- mindestens ein umfangsmäßig wirksames elastisches Element (64), das in einer peripheren Aufnahme (58) der primären Baugruppe (38) aufgenommen ist, um die sekundäre Baugruppe (40) drehbar mit umfangsmäßiger Dämpfung mit der primären Baugruppe (38) zu verbinden, und die umfangsmäßig zwischen einer Auflagefläche (66) der primären Baugruppe (38) und einer Auflagelasche (68) der sekundären Mitnehmerscheibe (54) angeordnet ist,
**dadurch gekennzeichnet, dass** die Reaktionsscheibe (20) axial feststehend im Verhältnis zu der Abtriebswelle (14A) dergestalt montiert werden kann, dass die sekundäre Baugruppe (40) im Verhältnis zu der Abtriebswelle (14A) axial feststehend ist;
und dadurch, dass die sekundäre Baugruppe (40) in der primären Baugruppe (38) mit einem axialen Spiel (J1) montiert ist, das ausreichend ist, um die freie axiale Durchfederung einer Welle (12) im Verhältnis zu der anderen (14A) ohne Behinderung zwischen der primären Baugruppe (38) und der sekundären Baugruppe (40) zu ermöglichen.

2. Reibungskupplungsvorrichtung (10) nach dem vorhergehenden Anspruch, **dadurch gekennzeichnet, dass** sie mindestens ein Reibungselement (94, 94B, 98, 116) umfasst, das axial zwischen der primären Baugruppe (38) und der sekundären Baugruppe (40) angeordnet ist, das eine periphere Aufnahme (58) der primären Baugruppe (38) dauerhaft auf abdichtende Weise verschließt, in welchem das umfangsmäßig wirksame elastische Element (64) gelagert ist, und dadurch, dass das Reibungselement (94A, 94B, 98, 116) drehfest im Verhältnis zu einer der Baugruppen (38) montiert ist, die tragend genannt wird, und gegen die andere Baugruppe (40) reibt, die reibend genannt wird.

3. Reibungsvorrichtung (10) nach dem vorhergehenden Anspruch, **dadurch gekennzeichnet, dass** die primäre Baugruppe (38) ein primäres hinteres Schwungrad (42) und eine primäre vordere Abdeckung (72) umfasst, die axial auf beiden Seiten der sekundären Baugruppe (40) angeordnet sind,
und dadurch, dass ein erstes der genannten Reibungselemente (94A, 98, 116) axial zwischen der sekundären Baugruppe (40) und der primären Abdeckung (72) angeordnet ist,
und dadurch, dass ein zweites der genannten Reibungselemente (94B, 98, 116) axial zwischen dem primären Schwungrad (42) und der sekundären Baugruppe (40) angeordnet ist.

4. Reibungskupplungsvorrichtung (10) nach irgendeinem der Ansprüche 2 oder 3, **dadurch gekennzeichnet, dass** mindestens ein Reibungselement (94A, 94B) axial zwischen der primären Baugruppe (38) und der sekundären Baugruppe (40) dergestalt angeordnet ist, dass das Auftreten von Vibrationsgeräuschen der sekundären Baugruppe (40) verhindert wird, und dadurch dass jedes Reibungselement (94A, 94B) axial gleitend an der Trägerbaugruppe (38) montiert ist.

5. Reibungskupplungsvorrichtung (10) nach dem vorhergehenden Anspruch, **dadurch gekennzeichnet, dass** die Mittel zur axialen Vorspannung (98) axial zwischen dem Reibungselement (94A, 94B) und der Trägerbaugruppe (38) angeordnet sind, um einen konstanten Kontakt zwischen dem Reibungselement (94A, 94B) und der Reibungsbaugruppe (40) aufrecht zu erhalten.

6. Reibungskupplungsvorrichtung (10) nach dem vorhergehenden Anspruch, **dadurch gekennzeichnet, dass** die Mittel zum Vorspannen aus Scheiben (98) ausgebildet sind, die elastisch radial gemäß einer axialen Richtung verformbar sind.

7. Reibungskupplungsvorrichtung (10) nach irgendeinem der Ansprüche 4 bis 6, **dadurch gekennzeichnet, dass** sie mindestens ein Paar Reibungselemente (94A, 94B) umfasst, die axial auf beiden Seiten der sekundären Baugruppe (40) und gegenüberliegend angeordnet sind.

8. Reibungskupplungsvorrichtung (10) nach irgendeinem der Ansprüche 2 bis 7, **dadurch gekennzeichnet, dass** mindestens ein Reibungselement aus einer Dichtungsscheibe (116) ausgebildet ist, die an der Trägerbaugruppe (40) befestigt ist und die durch Elastizität in ständigem Kontakt mit der Reibungsbaugruppe (38) ist, um eine angepasste Abdichtung der peripheren Aufnahme (58) zu ermöglichen.

9. Reibungskupplungsvorrichtung (10) nach dem vorhergehenden Anspruch, **dadurch gekennzeichnet, dass** die Dichtungsscheibe aus einer Blechscheibe (116) ausgebildet ist.

10. Reibungskupplungsvorrichtung (10) nach Anspruch 3, **dadurch gekennzeichnet, dass**:
- das erste Reibungselement (94A, 98) nach irgendeinem der Ansprüche 5 oder 6 hergestellt ist;
- das zweite Reibungselement (116) nach irgendeinem der Ansprüche 8 oder 9 hergestellt ist.

11. Reibungskupplungsvorrichtung (10) nach irgendeinem der vorhergehenden Ansprüche, **dadurch gekennzeichnet, dass** die sekundäre Baugruppe (40) mindestens eine axiale Beanspruchungsfläche (88) einer axialen Fläche umfasst, die dem Schub (90) gegenüber dem umfangsmäßig wirksamen elastischen Element (64) zugeordnet ist, und dadurch, dass mindestens eine der axialen Flächen, die der Beanspruchung (88) oder dem Schub (90) zugeordnet ist, axiale Abmessungen aufweist, die ausreichend sind, um während des axialen Durchfederns einer Welle (12) im Verhältnis zu der anderen (14A) der anderen Fläche (90, 88) gegenüberzuliegen.

12. Reibungskupplungsvorrichtung (10) nach dem vorhergehenden Anspruch, **dadurch gekennzeichnet, dass** die Beanspruchungsfläche (88) der sekundären Baugruppe (40) aus einer plastischen Verformung eines axialen radialen Teilabschnittes (86) einer transversalen Lasche (68) dergestalt ausgebildet ist, dass sie axial im Verhältnis zu der axialen Dicke der Lasche verdickt ist.

13. Reibungskupplungsvorrichtung (10) nach irgendeinem der Ansprüche 1 bis 8, **dadurch gekennzeichnet, dass** sie eine Zwischenmitnehmerscheibe (101) umfasst, die mit der sekundären Baugruppe (40) mittels eines umfänglichen Dämpfungsmechanismus mit winkelmäßigem Spiel (102, 106) verbunden ist.

14. Reibungskupplungsvorrichtung (10) nach irgendeinem der vorhergehenden Ansprüche, **dadurch gekennzeichnet, dass** der vordere Endabschnitt der Antriebswelle (12) im Verhältnis zu dem hinteren Endabschnitt der Abtriebswelle (14A) radial frei durchfedern kann, und dadurch, dass die sekundäre Baugruppe (40) im Verhältnis zu der primären Baugruppe (38) mit radialem Spiel (J2) angeordnet ist, um die freie radiale Durchfederung einer Welle (12) im Verhältnis zu der anderen (14A) zu ermöglichen.

15. Reibungskupplungsvorrichtung (10) nach dem vorhergehenden Anspruch zusammen genommen mit den Ansprüchen 6 und 8, **dadurch gekennzeichnet, dass** der Boden (80, 100) der peripheren Aufnahme (58), in dem das elastische Element (64) aufgenommen ist, dergestalt angeformt ist, dass die radialen und axialen Durchfederungen der Beanspruchungslasche (68) des elastischen Elements (64) der sekundären Baugruppe (40) ermöglicht wird.

16. Reibungskupplungsvorrichtung nach irgendeinem der Ansprüche 11 oder 12, **dadurch gekennzeichnet, dass** die Zweimassenschwungraddämpfung (24) Mittel umfasst, um die radiale Durchfederung einer Welle im Verhältnis zu der anderen zu begrenzen.

## Claims

1. Friction clutch device (10), in particular for a motor vehicle, for coupling a first rear drive shaft (12) with at least one second front driven shaft (14A) while allowing at least a free relative axial displacement of one shaft (12) with respect to the other (14A), the clutch device comprising a dual-mass flywheel (24) which comprises:
- a primary torque input assembly (38) which is able to be mounted axially fixed on a front end section (42) of the drive shaft (12);
- a secondary torque output assembly (40) which is connected in rotation to a reaction plate (20) of the clutch device (10) and which is carried by a rear end section of the driven shaft (14A), the secondary assembly (40) being mounted axially fixed with respect to the reaction plate (20) and comprising a secondary web (54);
- at least one elastic member (64) with circumferential action which is arranged in a peripheral housing (58) of the primary assembly (38) in order to connect the secondary assembly (40) in rotation with the primary assembly (38) with circumferential damping, and which is interposed circumferentially between a bearing face (66) of the primary assembly (38) and a bearing lug (68) of the secondary web (54), **characterized in that** the reaction plate (20) is able to be mounted axially fixed with respect to the driven shaft (14A) in such a way that the secondary assembly (40) is axially fixed with respect to the driven shaft (14A);
and **in that** the secondary assembly (40) is mounted in the primary assembly (38) with an axial play (J1) sufficient for allowing the free axial displacement of one shaft (12) with respect to the other (14A) without interference between the primary assembly (38) and the secondary assembly (40).

2. Friction clutch device (10) according to the preceding claim, **characterized in that** it comprises at least one friction element (94, 94B, 98, 116) which is interposed axially between the primary assembly (38) and the secondary assembly (40) and constantly sealingly closes a peripheral housing (58) of the primary assembly (38) housing the elastic member (64) with circumferential action, and **in that** the friction element (94A, 94B, 98, 116) is mounted fixedly in rotation with respect to one of the assemblies (38), termed carrier assembly, and in a frictionally engaged manner against the other assembly (40), termed frictional assembly.

3. Friction device (10) according to the preceding claim, **characterized in that** the primary assembly (38) comprises a rear primary flywheel (42) and a front primary cover (72) which are arranged axially on either side of the secondary assembly (40),
and **in that** a first of the said friction elements (94A, 98, 116) is interposed axially between the secondary assembly (40) and the primary cover (72),
and **in that** a second of the said friction elements (94B, 98, 116) is interposed axially between the primary flywheel (42) and the secondary assembly (40).

4. Friction clutch device (10) according to either one of Claims 2 and 3, **characterized in that** at least one friction element (94A, 94B) is interposed axially between the primary assembly (38) and the secondary assembly (40) so as to prevent the occurrence of noise by vibration of the secondary assembly (40), and **in that** each friction element (94A, 94B) is mounted so as to be able to slide axially on the carrier assembly (38).

5. Friction clutch device (10) according to the preceding claim, **characterized in that** axial prestressing means (98) are interposed axially between the friction element (94A, 94B) and the carrier assembly (38) in order to maintain constant contact between the friction element (94A, 94B) and the frictional assembly (40).

6. Friction clutch device (10) according to the preceding claim, **characterized in that** the prestressing means are formed by radial washers (98) which are elastically deformable in an axial direction.

7. Friction clutch device (10) according to any one of Claims 4 to 6, **characterized in that** it comprises at least one pair of friction elements (94A, 94B) which are arranged axially on either side of the secondary assembly (40) and opposite one another.

8. Friction clutch device (10) according to any one of Claims 2 to 7, **characterized in that** at least one friction element is formed by a sealing washer (116) which is fixed to the carrier assembly (40) and which is in permanent contact with the frictional assembly (38) by elasticity in order to allow suitable sealing of the peripheral housing (58).

9. Friction clutch device (10) according to the preceding claim, **characterized in that** the sealing washer is formed by a sheet metal washer (116).

10. Friction clutch device (10) according to Claim 3, **characterized in that**:
- the first friction element (94A, 98) is produced according to either one of Claims 5 and 6;
- the second friction element (116) is produced according to either one of Claims 8 and 9.

11. Friction clutch device (10) according to any one of the preceding claims, **characterized in that** the secondary assembly (40) comprises at least one axial face (88) for stressing an associated axial thrust face (90) opposite the elastic member (64) with circumferential action, and **in that** at least one of the associated stressing (88) or thrust (90) axial faces has axial dimensions sufficient to be opposite the other face (90, 88) during the axial displacement of one shaft (12) with respect to the other (14A).

12. Friction clutch device (10) according to the preceding claim, **characterized in that** the stressing face (88) of the secondary assembly (40) is formed by a plastic deformation of a portion of an axial radial edge (86) of a transverse lug (68) so as to be enlarged axially with respect to the axial thickness of the lug.

13. Friction clutch device (10) according to any one of Claims 1 to 8, **characterized in that** it comprises an intermediate web (101) which is connected in rotation with the secondary assembly (40) by way of a circumferential damping mechanism (102, 106) with angular play.

14. Friction clutch device (10) according to any one of the preceding claims, **characterized in that** the front end section of the drive shaft (12) is free to be displaced radially with respect to the rear end section of the driven shaft (14A), and **in that** the secondary assembly (40) is arranged with a radial play (J2) with respect to the primary assembly (38) in order to allow the free radial displacement of one shaft (12) with respect to the other (14A).

15. Friction clutch device (10) according to the preceding claim taken in combination with Claims 6 and 8, **characterized in that** the bottom (80, 100) of the peripheral housing (58) housing the elastic member (64) is configured so as to allow the radial and axial displacements of the lug (68) for stressing the elastic member (64) of the secondary assembly (40).

16. Friction clutch device according to either one of Claims 11 and 12, **characterized in that** the dual-mass flywheel (24) comprises means for limiting the radial displacement of one shaft with respect to the other.
